Europäisches Patentamt

European Patent Office

Office européen des brevets

(11) Numéro de publication: **0 366 578**
**A1**

(12) # DEMANDE DE BREVET EUROPEEN

(21) Numéro de dépôt: **89440088.6**

(22) Date de dépôt: **28.08.89**

(51) Int. Cl.⁵: **H04N 5/262**

(30) Priorité: **24.10.88 FR 8814090**

(43) Date de publication de la demande:
**02.05.90 Bulletin 90/18**

(84) Etats contractants désignés:
**AT CH DE ES GB GR IT LI LU NL SE**

(71) Demandeur: **MOSAIC BATISSEURS D'IMAGES INTERACTIVES S.A. dite:**
**Les Cardoulines Batiment 5**
**F-06560 Sophia Antipolis(FR)**

(72) Inventeur: **Pernet, Lionel**
**56 Rue Bermont**
**F-06700 Saint Laurent du Var(FR)**

(74) Mandataire: **Bossard, Jacques-René**
**Cabinet MEYER & COURTASSOL Bureau**
**EUROPE 20 Place des Halles**
**F-67000 Strasbourg(FR)**

(54) **Procédé et matériel pour la commande tactile du passage d'une image à une autre dans une séquence sélectionnée sur un vidéodisque.**

(57) La commande du passage d'une image à une autre dans une séquence d'images sélectionnées sur un vidéo-disque se fait à partir d'un programme comportant des possibilités de choix pour l'utilisateur, du type dans lequel ledit choix s'exprime par une pression du doigt de l'utilisateur sur un point déterminé (P1, P2, P3, P4) de l'écran vidéo (1). Le passage d'une première image (I1) à une seconde image (I2) fait progressivement, la seconde image supposée avoir été dissimulée par la première étant progressivement dévoilée par un effet de modification de forme de la première image ayant pour conséquence, d'une part de diminuer la superficie de cette première image et d'autre part de faire apparaître de nouvelles zones successives de la seconde image.

FIG. 3

# PROCEDE ET MATERIEL POUR LA COMMANDE TACTILE DU PASSAGE D'UNE IMAGE A UNE AUTRE DANS UNE SEQUENCE SELECTIONNEE SUR UN VIDEODISQUE.

La présente invention concerne un nouveau procédé pour la commande du passage d'une image à une autre dans une séquence d'images fixes ou un film, sélectionnées sur un vidéo-disque à partir d'un programme comportant des possibilités de choix pour l'utilisateur.

Il est devenu de pratique courante dans les diverses applications de l'informatique, de permettre à l'utilisateur de déterminer le choix, sur un vidéo-disque d'une image ou d'une séquence filmée, parmi un certain nombre de telles images ou séquences, ce choix se faisant à partir d'une sommaire apparaissant sur l'écran.

Selon un premier moyen, l'utilisateur exprime son choix en tapant sur le clavier le code correspondant à l'image ou à la séquence sélectionnée.

Selon un second moyen, on fait appel à l'application de l'écran tactile, le choix se faisant simplement en posant le doit sur l'écran : l'emplacement du sujet choisi, qui peut être le titre ou le nom dudit sujet, ou même le sujet lui-même, par exemple la tête d'un personnage.

La caractéristique commune à ces deux moyens est le passage instantané à l'image ou à la séquence de film ainsi sélectionnée.

Par ailleurs, dans le cas de l'écran tactile, la commande se fait toujours par un contact ponctuel, ou, au plus, sur une surface réduite.

Il n'existe pas, à ce jour, de moyen permettant de passer progressivement d'une image à l'autre, et notamment un moyen de ce genre faisant appel à la technique de l'écran tactile.

L'invention vise à atteindre ce résultat nouveau, qui ouvre la possibilité de très nombreuses applications dans le domaine de la communication, de l'éducation et de la publicité.

Le procédé selon l'invention consiste à déterminer le passage progressif d'une première image à une seconde image supposée avoir été dissimulée par la première, en créant sur l'écran un effet de déformation de la première image, ayant pour conséquence d'une part de diminuer sa superficie, et d'autre part, de faire apparaître la portion de la seconde image progressivement dévoilée par cette diminution de la première.

Selon une caractéristique de l'invention, ledit passage progressif est réversible c'est à dire que la déformation de la première image peut s'opérer dans un sens ou en sens contraire selon le parcours du point de contact de l'utilisateur le long dudit parcours sur l'écran. Au surplus, la déformation de la première image cesse quand ledit contact cesse lui-même, mais demeure au point où elle état parvenue.

Sur le plan de la réalisation pratique, ce résultat est obtenu par une mise en oeuvre particulière de la technique de l'écran tactile.

Selon l'invention, au lieu du passage d'une image complète à une autre image complète au moment de la pression du doigt sur un point précis de l'écran, on enregistre dans la mémoire vive de l'ordinateur le nombre d'images successives représentant la décomposition du mouvement de la première image pour dévoiler progressivement la seconde, et à chaque emplacement du doigt sur l'écran correspondra une des images décomposées, étant entendu que le déplacement du doigt doit être continu, d'une position à la suivante.

Pour mieux comprendre l'invention, on va en décrire la mise en pratique dans le cas où la première image représente une page de livre, et la seconde image représente une illustration dudit livre, dévoilée à mesure que l'on "tourne" ladite page en déplaçant le point de contact sur l'écran vers la gauche, depuis le coin inférieur droit. Cette description est faite avec référence au dessin annexé.

Sur ce dessin :

- la figure 1 représente l'écran à l'amorce du processus,

- les figures 2 et 3 représentent l'écran dans deux étapes intermédiaires,

- et la figure 4 représente l'écran à la fin du processus.

On a représenté, sur ce dessin l'écran 1 sur lequel apparaît, en permanence, à l'origine, un livre ouvert L.

Au début, la page du livre apparaissant sur l'écran est I1 portant par exemple un titre ou un texte d'introduction.

L'image suivante I2 n'est pas visible, sauf le coin inférieur droit, découvert par le relèvement de coin correspondant de l'image I1, quand l'opérateur a un premier contact avec l'écran au point P1.

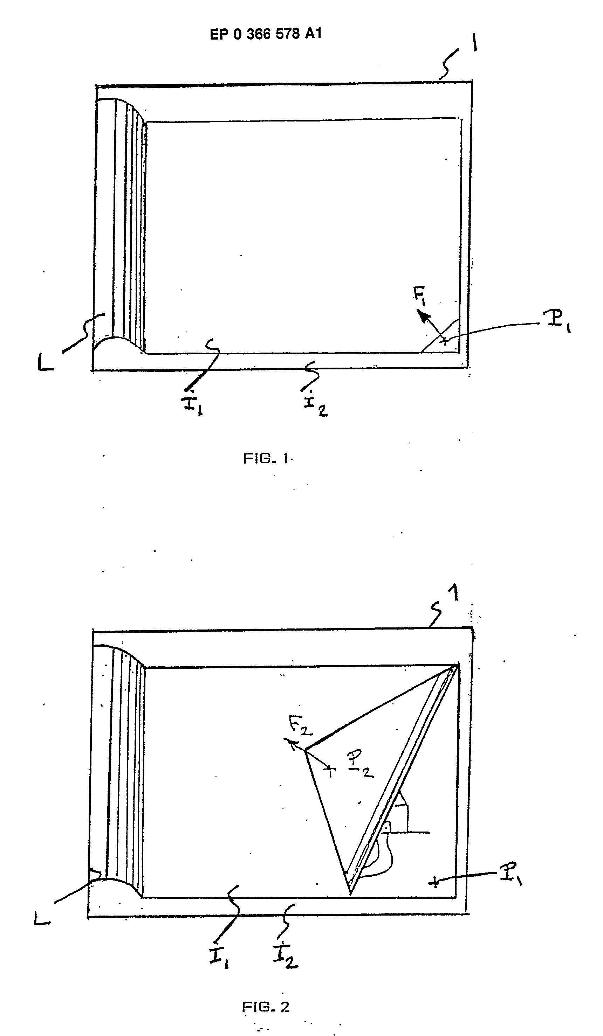

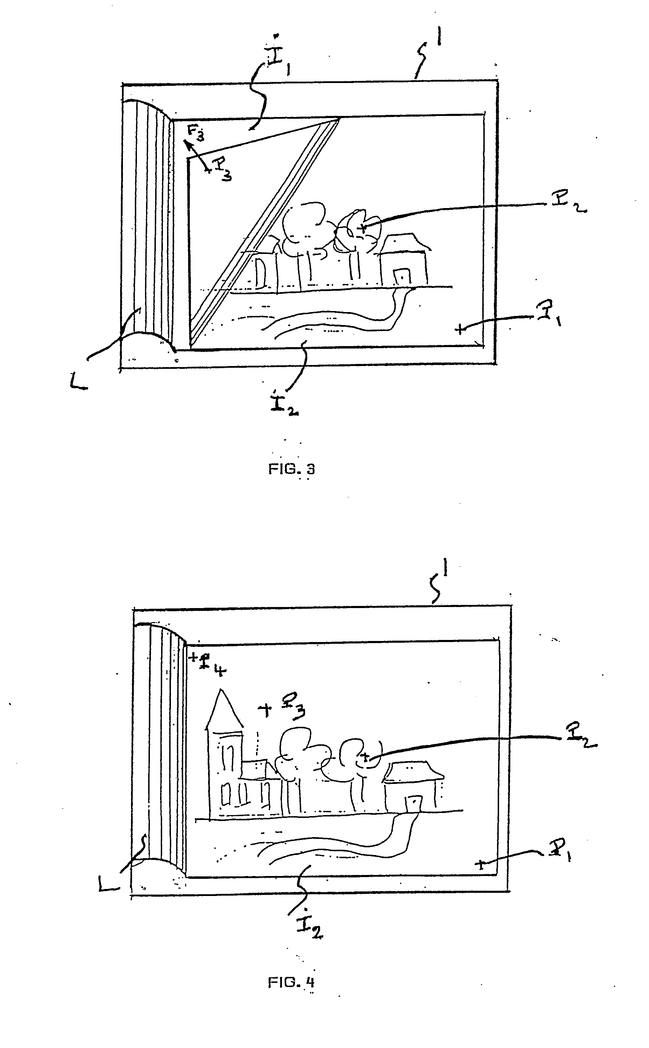

Selon l'invention, quand l'opérateur déplace son point de contact le long d'une ligne passant par des points P2, P3, P4, d'autres images apparaissent, correspondant au "relèvement" de l'image I1 suivant des formes et emplacements apparaissants aux figures 2, 3 et 4, ces autres images donnant l'impression de dévoiler progressivement l'image I2. A l'arrivée au dernier point P4, l'image I1 a complètement disparu, et seule apparaît sur l'écran l'image I2, comme si la "page" avait été "tournée".

Le déplacement continu du point de contact le long de la ligne P1-P2-P3-P4 a donc pour effet de simuler l'action de tourner la page portant une image pour dévoiler la page suivante. Il est important de noter que l'arrêt en un point intermédiaire P2 ou P3 a pour effet d'arrêter l'opération, qui peut ensuite reprendre à volonté, tandis que de même un retour en arrière d'un point vers le point précédent ramène l'image dans son aspect précédent.

Le procédé selon l'invention permet donc de créer des effets que l'on n'atteignait jusqu'à présent que dans le réalisation de dessins animés ou de trucages cinématographiques, et surtout d'en rendre l'utilisateur complètement maître.

Bien qu'évidemment une application immédiate soit la présentation de séquences filmées précédées d'un titre, le procédé offre de très nombreuses autres possibilités, dans lesquelles l'image I1 peut prendre la forme d'un rideau que l'on tire, une tenture ou un vêtement que l'on soulève, une porte qu'on ouvre, un nuage qui se dissipe etc...

Les moyens techniques utilisés dans ce procédé constituent une nouvelle extension de la technique de l'écran tactile.

Ils consistent essentiellement, comme exposé plus haut, à enregistrer dans la mémoire vive de l'ordinateur, l'ensemble des images représentant la décomposition de I1 et la "composition" de I2, le déplacement du doigt déterminant le passage de l'une à la suivante. Dans la pratique, pour une consultation harmonieuse, on enregistre sur le disque laser une image compressée représentant la tête du chapitre à consulter. Les différentes images vidéo compressées devront être enregistrées sur le disque suffisamment proches les uns des autres afin d'éviter les passages de noirs lors de la "consultation" du livre, dans le cas de l'exemple utilisé.

Par ailleurs, le livre, dans le cas de l'exemple, doit contenir au centre de la feuille un cadre noir (couleur d'incrustation) pour faire apparaître l'image vidéo. Quand le doigt de l'utilisateur se déplace sur l'écran, dès que le coin inférieur droit de la page constituant l'image I1 passe par dessus le cadre de l'image vidéo, un code est envoyé au vidéo-lecteur, afin de changer ladite image. A partir de cet instant, on teste si le coin de la page repasse par la même position dans l'autre sens (si la page est retombée). Dans ce cas, un autre code est envoyé au vidéolecteur afin de restituer l'image précédente.

Si la pression du doigt sur l'écran est interrompue, la position de la page est testée. Si celle-ci est supérieure ou égale à la "position d'équilibre" le cycle de la page se termine automatiquement.

Si celle-ci est inférieure à la "position d'équilibre" le cycle inverse se fait automatiquement (la page retombe) jusqu'à ce qu'une nouvelle pression du doigt dans la zone correspondant à la position instantanée de la page, soit détectée.

Bien entendu, une telle séquence d'images peut ne pas être unique dans son programme ; pour reprendre l'exemple du livre, on peut prévoir autant de séquences de ce genre qu'il y a de chapitres différents au livre. Le procédé selon l'invention est donc, par définition, répétitif, d'autres exemples étant le soulèvement de plusieurs rideaux ou tentures successifs avant de dévoiler un message ou un spectacle, ou la croissance ou la décroissance d'une forme géométrique centrée sur le milieu de l'écran, ce qui met en lumière le très large éventail des applications de l'invention.

**Revendications**

1. Procédé pour la commande du passage d'une image à une autre dans une séquence d'images sélectionnées sur un vidéo-disque à partir d'un programme comportant des possibilités de choix pour l'utilisateur, du type dans lequel ledit choix s'exprime par une pression du doigt de l'utilisateur sur un point déterminé de l'écran vidéo, caractérisé en ce que le passage d'une première image à une seconde image se fait progressivement, le seconde image supposée avoir été dissimulée par la première étant progressivement dévoilée par un effet de modification de forme de la première image ayant pour conséquence, d'une part de diminuer la superficie de cette première image et d'autre part de faire apparaître de nouvelles zones successives de la seconde image.

2. Procédé selon la revendication 1, caractérisé en ce que ladite déformation progressive de la première image est provoquée par le déplacement également progressif du point de contact de l'utilisateur de l'écran le long d'un parcours déterminé.

3. Procédé selon les revendications 1 et 2, caractérisé en ce que ladite action progressive est réversible et peut être interrompue en tous points.

4. Procédé selon les revendications 1 et 3, caractérisé en ce que ladite action résulte de l'enregistrement, dans la mémoire vive de l'ordinateur, de l'ensemble des images intermédiaires représentant la décomposition du mouvement de la première image pour dévoiler progressivement la seconde, chaque emplacement du doigt sur l'écran correspondant à l'une desdites images décomposées.

5. Procédé selon la revendication 4, caractérisé en ce que les différentes images vidéo sont compressées et enregistrées suffisamment proches les unes des autres afin d'éviter les passages de noirs.

6. Application du procédé selon l'une des revendications 1 à 5, à la publicité, la communication, l'éducation, le spectacle ou analogue.

7. Ensemble audio-visuel du type comportant un micro-ordinateur, dont le programme détermine la lecture d'un vidéo-disque, la sélection des plage du vidéo-disque se faisant par la technique de l'écran tactile, caractérisé en ce que ledit vidéodisque contient au moins une séquence d'images simulant le passage d'une première image complète à une seconde image complète, ladite séquence comportant la décomposition dudit passage et étant commandée par une série de contacts sur l'écran tactile, telle que le défilement de ladite décomposition résulte du déplacement continu du doigt de l'utilisateur le long d'un trajet déterminé sur l'écran tactile.

EP 0 366 578 A1

FIG. 1

FIG. 2

FIG. 3

FIG. 4

**Office européen des brevets**

**RAPPORT DE RECHERCHE EUROPEENNE**

Numero de la demande

EP 89 44 0088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 944 731 (BUSCH)<br>* Colonne 2, ligne 46 - colonne 3, ligne 57; colonne 8, lignes 9-26; figure 1 * | 1,2,7 | H 04 N 5/262 |
| A | --- | 3 | |
| Y | COMPUTER, vol. 11, no. 11, novembre 1978, pages 9-18, IEEE, New York, US; M. OHLSON: "System design considerations for graphics input devices"<br>* Page 11, colonne de gauche, ligne 5 - colonne de droite, ligne 12; figure 2 * | 1,2,7 | |
| A | US-A-4 698 682 (ASTLE)<br>* Colonne 3, lignes 1-17 *<br>--- | 4 | |
| A | EP-A-0 145 206 (INTERNATIONAL STANDARD ELECTRIC CORP.)<br>* Page 3, ligne 7 - page 7, ligne 23 *<br>--- | | |
| A | EP-A-0 186 206 (SONY)<br>* Résumé * | | |

**DOMAINES TECHNIQUES RECHERCHES (Int. Cl.5)**

H 04 N 5
G 06 F 3
G 06 K 11

Le présent rapport a été établi pour toutes les revendications

| Lieu de la recherche | Date d'achèvement de la recherche | Examinateur |
|---|---|---|
| LA HAYE | 03-01-1990 | DUHR R.H.J.E. |